# EUROPEAN PATENT SPECIFICATION

(11) **EP 2 224 877 B1**
(45) Date of publication and mention of the grant of the patent: **29.08.2018**
(21) Application number: 08866367.9
(22) Date of filing: 22.12.2008
(51) Int. Cl.: A61C 17/20, A61C 1/08

(54) **ULTRASONIC DENTAL INSERT AND LIGHTED HANDPIECE ASSEMBLY**
ULTRASCHALL-ZAHNEINSATZ UND BELEUCHTETE HANDSTÜCKANORDNUNG
INSERT DENTAIRE À ULTRASONS ET ENSEMBLE DE PIÈCE À MAIN ÉCLAIRÉ

(30) Priority: 21.12.2007 US 4888
(43) Date of publication of application: 08.09.2010
(73) Proprietor: DENTSPLY SIRONA Inc., York, PA 17401-2991 (US)
(72) Inventor: WERNER, Peter, Columbia PA 17512 (US); CHRONISTER, Ben, York PA 17406 (US); BARTO, Matt, Dover PA 17315 (US)
(74) Representative: Hartz, Nikolai
(86) International application number: PCT/US2008/014059
(87) International publication number: WO 2009/085292

(56) References cited:
- WO-A-03/051221
- WO-A-2008/021507
- US-A- 4 330 274
- US-B1- 6 304 712
- US-B1- 6 386 866
- US-B2- 7 104 794

## Description

### BACKGROUND OF THE INVENTION

### Field of the Invention

The present invention relates generally to dental instruments that can be used for cleaning and polishing teeth. More particularly, the invention relates to dental inserts installed in ultrasonic dental handpieces. Scaling and polishing inserts are some examples of inserts that can be used. The handpiece includes a removable sleeve with a light source for illuminating the working area inside of the mouth. The light source is coupled to a flexible light guide.

### Brief Description of the Related Art

Dental practitioners commonly use dental handpieces equipped with ultrasonic scaling inserts for providing therapeutic and preventive care to their patients. For example, Steri-Mate® handpieces (Dentsply) can be equipped with ultrasonic inserts to remove calculus deposits and heavy plaque from tooth surfaces. Ultrasonic scaling also may be used for periodontal debridement in treating periodontal diseases.

Conventional ultrasonic dental scaler systems include a power base or drive unit. The dental handpiece is connected to the base unit by a handpiece cable. An ultrasonic scaling insert is inserted into the handpiece. Different scaling inserts are used depending upon the health of the patient, the tooth to be treated, and amount of calculus and plaque deposits to be removed from the tooth surfaces. When ready, the dental practitioner powers on the base unit and manipulates the attached handpiece containing the scaling insert to treat the patient. The scaling insert, which is based on magnetostrictive or piezoelectric technology, vibrates at ultrasonic frequency to clean the tooth surfaces.

In a piezoelectric system, fixed ceramic crystals in the handpiece vibrate to cause the tip of the scaling insert to move in a linear stroke pattern. In a magnetostrictive system, the handpiece includes an energizing coil that surrounds the scaling insert. A transducer containing plates made of nickel alloy or other magnetostrictive material is located at one end of the scaling insert and a scaling tip is located at the other end. The energizing coil in the handpiece excites the plates of magnetostrictive material in the scaling insert via a magnetic field so the plates longitudinally expand and contract at ultrasonic frequencies. This causes the tip of the insert to vibrate. In recent years, dental handpieces and magnetostrictive scaling inserts with light sources have been developed.

For example, Levy, US Patent 7,104,794 discloses an ultrasonic dental insert having a light-emitting diode (LED) light source. The dental insert includes a first transducer for generating ultrasonic vibrations; a connecting body with a proximal end attached to the first transducer so as to receive the ultrasonic vibrations; and a second transducer that generates a voltage signal in response to the vibrational movement of the connecting body. The LED receives the voltage signal from the second transducer to generate light. Thus, the movement of the connecting body (according to ultrasonic vibrations) inside a secondary coil induces a voltage which powers the light. The ultrasonic vibrational mechanical energy is converted by the secondary coil to electrical energy which is used by the light source to emit light.

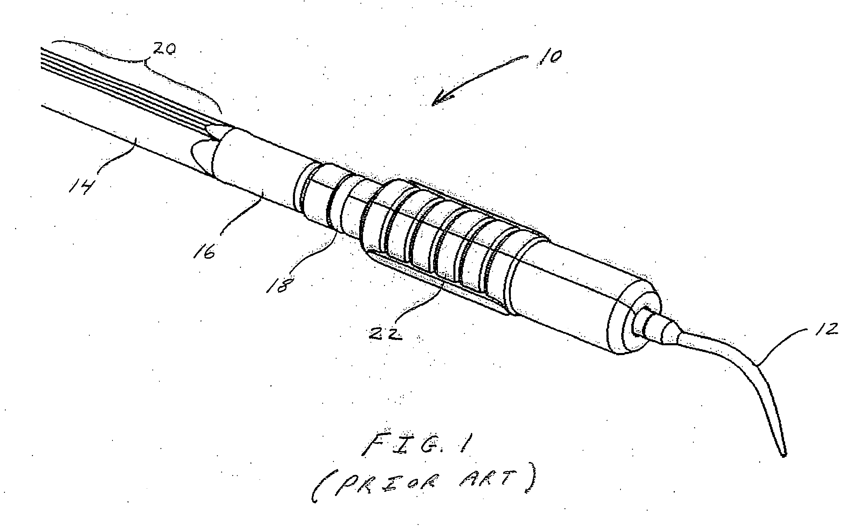

Hecht et al., US Patent 6,386,866 discloses an ultrasonic handpiece and scaler insert system. A plastic sleeve including a LED and enclosing a secondary coil is mounted on the handpiece, which contains a primary coil. The LED is powered by an inductive transfer of electromagnetic energy between the primary coil located in the handpiece and secondary coil located in the plastic sleeve. The electromagnetic energy generated by an electrical current in the secondary coil powers the LED. Figure 1 in the '866 Patent shows a light guide having a light source at one end. However, there is no disclosure of a flexible light guide that can bend and flex in any direction

Quan et al, WO2008/021507 discloses an ultrasonic dental handpiece and insert assembly comprising a dental insert having a tip located at one end and a transducer for generating ultrasonic vibrations located at a second end, the tip being coupled to the transducer by a connecting body, a handpiece enclosing a primary coil, the handpiece comprising a forward-facing nose portion and a rear- facing handle portion, the nose portion including an opening for receiving the dental insert, a sleeve removably mounted on the handpiece, the sleeve enclosing a secondary coil, the primary and secondary coils being inductively coupled so that electrical energy is transferred from the primary to secondary coil, the energy being sufficient to power a light source and a flexible light guide member extending outwardly from the sleeve, the light guide member having a proximal end coupled to the sleeve and a distal end containing a light source, wherein the dental insert is a scaling insert used for removing calculus and plaque from tooth surfaces.

Conventional ultrasonic scaling inserts having light sources are generally effective; however, there is a need for an improved scaling insert. For example, it would be desirable to have a flexible light guide that could be adjusted to illuminate the working area inside of the mouth. Ideally, the practitioner would be able to adjust the light guide so that the light could be emitted in any direction. Dental inserts having such illuminating features would be advantageous, because the practitioner could use them to better clean teeth in hard-to-reach areas. It would also be desirable to have a light source that could be mounted and removed easily from the handpiece. Furthermore, the light source should be made out of an autoclavable material that could be sterilized after patient use. The present invention provides an ultrasonic dental insert and lighted handpiece assembly having these features and advantages as well as others.

### SUMMARY OF THE INVENTION

The present invention relates to an ultrasonic dental handpiece and insert as defined in independent claim 1. Different dental inserts can be used with the handpiece. Scaling inserts used for removing calculus and plaque from tooth surfaces are particularly preferred. The dental insert has a tip located at one end and a transducer for generating ultrasonic vibrations located at a second end. The tip is coupled to the transducer by a connecting body. The dental insert is placed in a dental handpiece containing a primary coil. A tubular sleeve is removably mounted on the handpiece. The sleeve encloses a secondary coil. A flexible light guide member extends from the sleeve. The light guide includes a flexible tube having a proximal end coupled to the sleeve and a distal end containing a light source such as a light-emitting diode (LED). The light guide can bend and flex in any direction allowing the light source to emit light in any direction. The primary and secondary coils are inductively coupled so that electrical energy is transferred between the coils. The current is transferred from the primary coil in the handpiece to the secondary coil in the mounted sleeve. The induced current in the secondary coil is sufficient to power the light source located at the distal end of the light guide member. Preferably, the sleeve including the light guide is made of an autoclavable material that can be sterilized after use.

### BRIEF DESCRIPTION OF THE DRAWINGS

The novel features that are characteristic of the present invention are set forth in the appended claims. However, the preferred embodiments of the invention, together with further objects and attendant advantages, are best understood by reference to the following detailed description in connection with the accompanying drawings in which:
**FIG. 1** is a perspective view of a dental scaling insert having a hard grip member that can be used in the assembly of this invention;
**FIG. 2** is a perspective view of a dental scaling insert having a soft grip member that can be used in the assembly of this invention;
**FIG. 3** is an exploded view of a dental handpiece and scaling insert that can be used in the assembly of this invention;
**FIG. 3A** is an exploded view of a dental handpiece and scaling insert and air polishing insert that can be used in the assembly of this invention;
**FIG. 4** is a partially cut-away perspective view of a sleeve having a flexible light guide that can be used in the assembly of this invention;
**FIG. 4A** is an exploded view of the sleeve shown in FIG. 4;
**FIG. 5** is a perspective view of an ultrasonic dental scaler base unit that can be used in accordance with this invention;
**FIG. 6** is a schematic diagram showing the primary coil of the handpiece and secondary coil of the sleeve which is mounted over the handpiece;
**FIG. 7** is a side perspective view of the ultrasonic dental handpiece and scaling insert assembly; and
**FIG. 8** is a perspective view of a sleeve and includes directional arrows showing the flexible light guide can be angled to point in any direction.

### DETAILED DESCRIPTION OF THE PREFERRED EMBODIMENTS

Referring to **FIG. 1****,** one example, not according to the claimed invention, of a dental insert that can be used in an assembly is shown and generally indicated at (10). Although the dental insert (10) is described herein primarily as being an ultrasonic scaling insert, it should be understood that this is for illustration purposes and other dental inserts can be used in the assembly of this invention as needed. For example, air polishing inserts, endodontic inserts, and drills can be used. The insert (10) can be designed to deliver air, powder, water, and other fluids as is known in the art.

Ultrasonic scaling inserts are commonly known in the dental field and can be used in accordance with this invention, provided that they are compatible with the dental handpiece. For example, Cavitron® Focused Spray® Slimline® ultrasonic insert, available from Dentsply International, can be used in the handpiece assembly. In general, the scaling insert (10) includes a tip (12) located at a first end and an ultrasonic transducer (14) located at a second end. The tip (12) is coupled to the transducer by a connecting body (16). In some instances, the tip (12) can be removably attached to the connecting body (16). This allows the dental practitioner to change scaling tips (12) depending upon the intended application. The tip (12) is made from a high temperature-resistant plastic or metal material.

The scaling insert (10) is fitted into a dental handpiece (not shown) as described further below. The scaling insert (10) has an O-ring (18) mounted thereon for engaging and pressing against the inner surface of the handpiece so as to form a water-tight seal. The O-ring (18) is slightly compressed as the insert (10) is placed in the handpiece and provides a mounting structure to hold the insert (10) in the handpiece. The transducer (14) of the scaling insert (10) comprises a stack of thin plates (20) made of nickel alloy or other magnetostrictive material. When a primary coil in the handpiece is energized, an electromagnetic field is created so the plates (20) in the transducer (14) longitudinally expand and contract at ultrasonic frequencies. The connecting body (16) delivers the ultrasonic vibrations generated by the transducer (14) to the scaling tip (12). This causes the tip (12) of the scaling insert (10) to vibrate. The connecting body (16) of the scaling insert (10) is made of a material suitable for transmitting ultrasonic vibrations such as, for example, stainless steel. In **FIG. 1****,** the scaling insert (10) includes a hard grip member (22) for the practitioner to hold. The hard grip member (22) can be made from a rigid polymeric material such as a liquid crystal polymer (LCP). The material should be autoclavable. In addition to providing the insert (10) with a gripping surface, the hard grip (22) provides channels for delivering water and other fluids to the tip (12). Alternatively, the scaling insert (10) can have a soft hand grip.

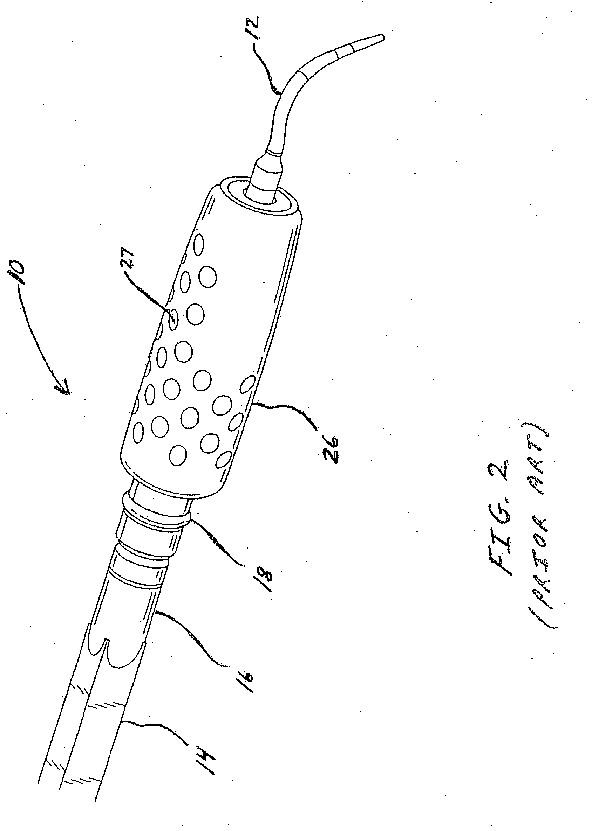

**FIG. 2** shows a sample soft hand grip (26) that has been snap-fitted onto the scaling insert (10). One example of a suitable hand grip is described in Pollock et al., US Patent Application Publication No. US 2005/0095556. These relatively soft grip members (26) are made of a rigid polymeric inner wall conjoined to a co-axial elastomeric outer wall. This dual wall structure provides several benefits including, for example, the ability to absorb the ultrasonic vibrations that normally would be transmitted from the scaling insert (10) to the hand of the practitioner. The soft grip members (26) are durable yet comfortable to hold. The outer surface of the grip member (26) can be textured; for example, it may include dimples (27) to provide the user with even better grip and control.

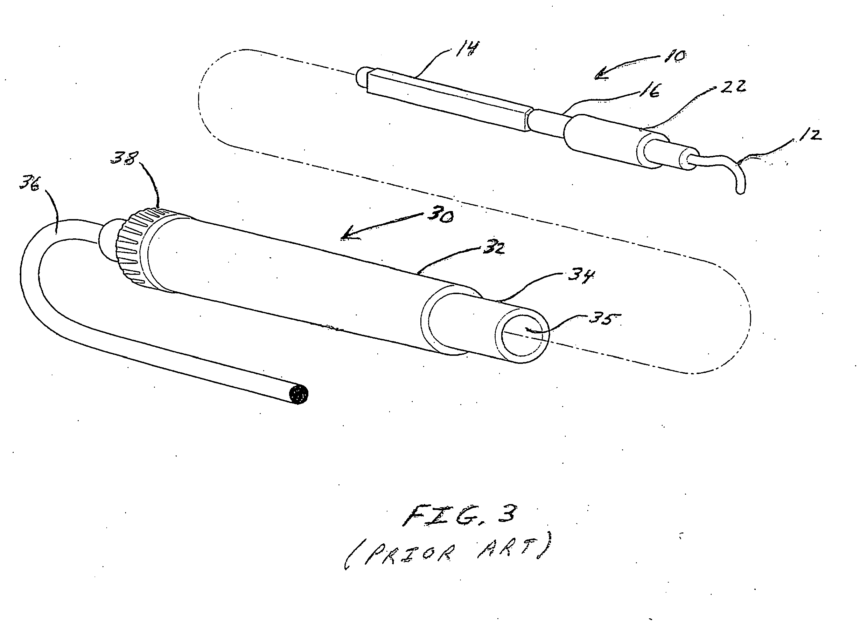

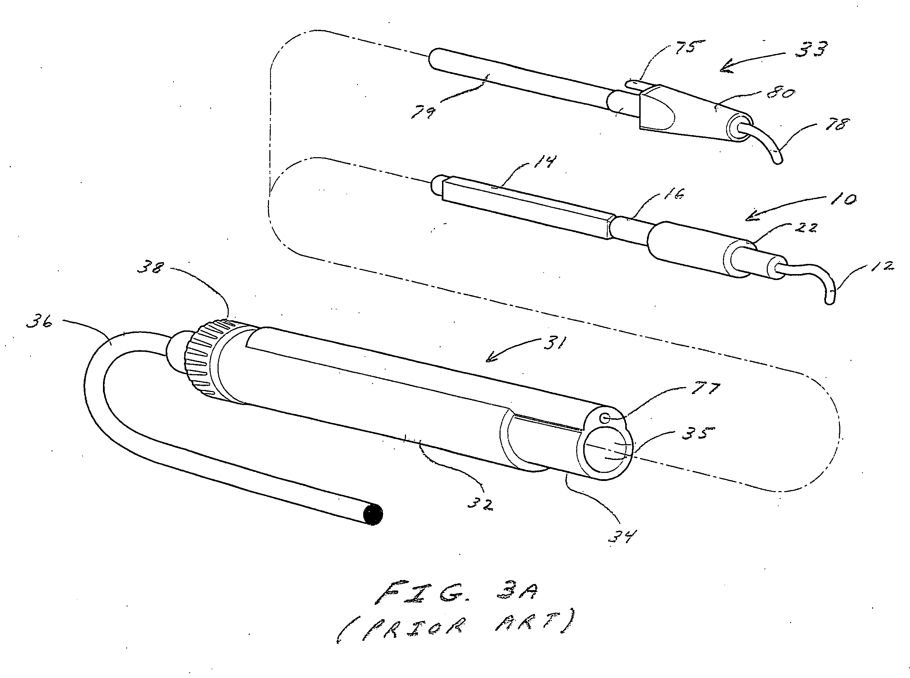

In **FIG. 3****,** an example, not according to the claimed invention, of a dental handpiece (30) suitable for receiving the scaling insert (10) is shown. The handpiece (30) comprises a housing having a rear-facing handle portion (32) and forward-facing neck portion (34) with an opening (35) adapted for receiving the scaling insert (10). The scaling insert (10) is force-fitted into the opening (35). In practice, the dental clinician gently pushes the scaling insert (10) into the handpiece (30) until it is fully seated. There is a close interference fit between the scaling insert (10) and handpiece (30). Thus, the scaling insert (10) is tightly secured to the handpiece (30) and will not detach during use. The handpiece (30) is attached to the scaler base unit (not shown) by a flexible handpiece cable (36). The handpiece cable (36) includes electrical lines for transmitting electrical current to the handpiece (30) and may also include conduits for delivering air, powder, water, and other fluids to the handpiece and insert (10).

Referring to **FIG. 3A****,** a second version of a dental handpiece (31) that can be used is shown. The handpiece (31) is similar to the handpiece (30) shown in FIG. 3 and like reference numerals are used to identify like components. The handpiece (31) has a generally oblong structure and includes a housing having a rear-facing handle portion (32) and forward-facing neck portion (34) with an opening (35). The key difference between the handpieces (30, 31) is that handpiece (31) is designed to be equipped with the scaling insert (10) or air polishing insert (33). The procedure for ultrasonically cleaning the tooth surfaces using the scaling insert (10) is described above. On the other hand, if the dental practitioner wishes to air polish the patient's teeth, he/she can place the air polishing insert (33) in the handpiece (31). The air polishing insert delivers air/powder/water slurry to polish the tooth surfaces. A powder inlet tube (75) is adapted to fit into the powder delivery port (77) of the handpiece (31). Sodium bicarbonate powder can be used. Water is fed over the heating element (79) and into the nozzle (80). Air and water pressure is used to deliver a controlled stream of the cleaning powder through the insert tip (78) to polish the teeth. It should be apparent to a person of ordinary skill in the art that any suitable dental handpiece could be used in accordance with this invention. The handpieces (30, 31) are shown for illustration purposes and other handpieces can be used.

A primary coil (not shown) is enclosed in the handpiece (30) to provide energy to the magnetostrictive transducer (14) in the scaling insert (10). This makes the transducer (14) vibrate at ultrasonic frequency to drive the scaling tip (12). If water or other rinsing fluid is being used, the handpiece cable (36) includes a control knob (38) that can be rotated for adjusting the flow of fluid through the handpiece (30) and to the insert (10). Cool tap water normally is used as the rinsing fluid, because it can remove heat from the tooth surfaces and help minimize pain and discomfort. Alternatively, other cooling fluids can be used. The cooling fluid can be used to irrigate the working area in the oral cavity and clean the area of debris. In addition, because the transducer (14) of the scaling insert (10) generates internal heat due to vibration of the laminar stack of magnetostrictive plates (20), the cooling fluid may first be circulated around the transducer (14) to cool the plates (20).

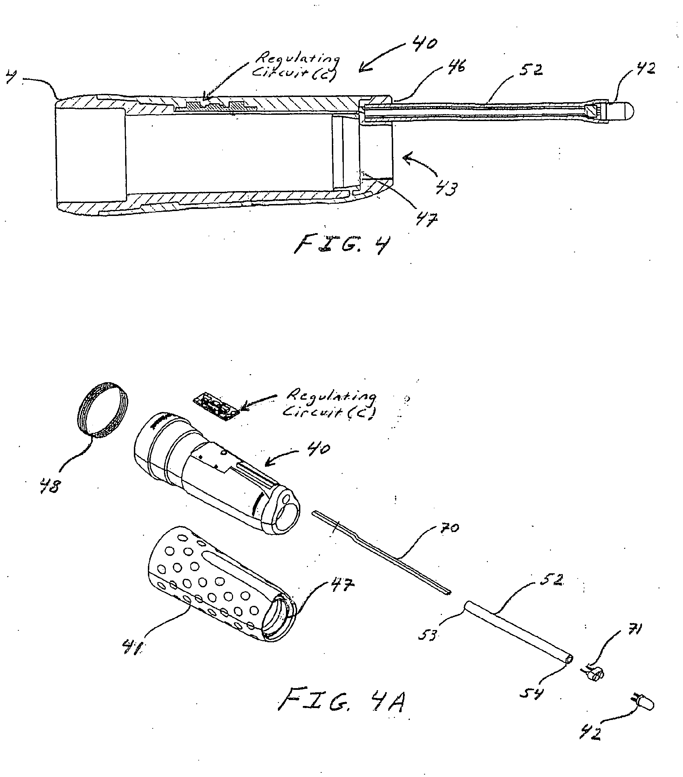

The present invention provides an improvement over existing dental handpiece and insert systems. Referring to **FIGS. 4 and 4A****,** the key improvement of this invention comprising a flexible tubular sleeve (40) having an outwardly extending light guide member (50) with a light source (42), is shown. The sleeve (40), having a substantially cylindrical shape, can be removably mounted on the handpiece (30). The sleeve (40) slides easily onto the housing of the handpiece (30), because the geometric shapes of the sleeve (40) and handpiece are complementary. More particularly, the interior of the sleeve (40) defines a central bore (43) extending along the longitudinal axis from the proximal (44) to distal ends (46). The diameter of the bore (43) extending through the sleeve (40) is substantially of the same as the diameter of the dental handpiece (30) that will receive the sleeve (40). The diameter of the bore (43) tapers off so the distal end (46) has a somewhat smaller diameter than the proximal end (44). The sleeve (40) slides over the handpiece (30) and is held tightly in place by a close friction-fit. A retaining means such as annular member (47) makes contact with the handpiece handle (32) and creates this tight interference fit. The annular member (47), which can be an elastomeric ring, mechanically bonds the sleeve (40)) to the external surface of the handpiece handle (32).

The sleeve (40) encloses a secondary coil (48) with a regulating circuit (C) that will be inductively coupled to the primary coil in the handpiece (30) as described further below. That is, the secondary coil (48) is embedded in the body of the tubular sleeve (40). A flexible light guide member (50) extends outwardly from the sleeve (40). The light guide member (50) generally comprises a flexible tube or sheath (52) containing electrical conductors (70). The flexible tube (52) includes a proximal end (53) coupled to the sleeve (40) and a distal end (54) containing a light source (42). The light source (42) is held in place by an electrical connector (71) and can be easily replaced. For example, a light-emitting diode can be used as the light source (42) and the user may want to remove a LED that emits light at one wavelength and substitute a new LED that emits different light in place thereof. The sleeve (40) and flexible light guide (50) can be made from any suitable material such as a plastic or composite material. For example, the sleeve (40) and light guide (50) can be made of a polyphenylene ether material such as NORYL GFN-2 (SABIC Innovative Plastics, formerly General Electric Plastics), polyesters, polyamides, polyetherimides, polystyrenes, acetals, and styrene-acrylonitrile butadiene (ABS) blends, thermoplastic elastomers such as SANTOPRENE 281-64MED (Advanced Elastomer Systems), or other engineering polymers Preferably, the sleeve (40) is made of a rigid polymeric material and the flexible tube (52) of the light guide (50), which houses the electrical conductors (70), is made of a flexible polymeric material.

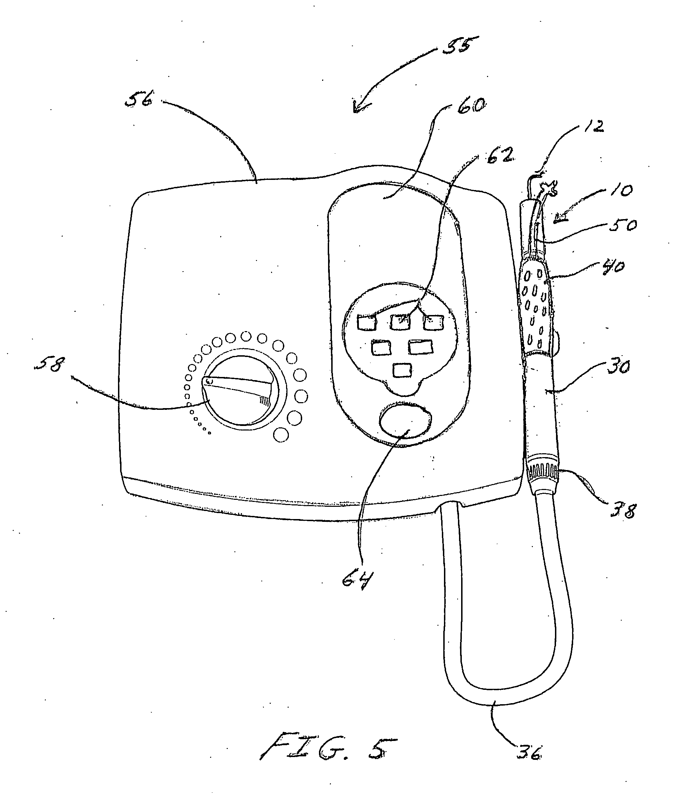

An example, not according to the invention, of an ultrasonic dental scaler system (55) that can be used in accordance with the present invention is shown in **FIG. 5****.** A standard power cord (not shown) connects the power base unit (56) to an electrical outlet that supplies power (for example, 100-240 volts). A water supply line (not shown) is used to provide water and other rinsing fluids to the scaler system. One end of the water supply line is inserted into a connector located on the backside panel of the base unit (56). The other end of the water supply line is connected to a dental office water line or fluid-dispensing device. With a fluid dispensing device, the dental practitioner can select either water or medicament fluids. A main power-control On/Off switch is located on the underside panel of the base unit (56). The dental clinician places the insert (10) into the handpiece (30) and powers on the base unit (56). A footswitch (not shown) is used to activate the base unit (56). An electrical cable tethers the footswitch to the base unit (56) in a hard-wired system. Alternatively, remote wireless foot control systems, which do not use connector cables to tether the footswitch to the base unit (56), can be utilized. By pressing the footswitch to the base unit (56), electrical energy is sent to the handpiece (30) and the primary coil inside of the handpiece (30) is energized. This creates an electromagnetic field causing the thin plates (20) in the transducer (14) of the scaling insert (10) to begin vibrating.

The scaling tip (12) is coupled to the transducer (14) by a connecting body (16) so the tip begins vibrating in an elliptical stroke pattern **(****FIGS. 1** **and** **2****).** The tip (12) vibrates at an ultrasonic frequency defined generally as being within the range of 18 to 50 kHz (18,000 to 50,000 cycles per second). The scaling inserts (10) normally have an operational frequency of either 25 kHz or 30 kHz. The scaling insert (10) is automatically tuned so the laminar stack of plates (20) vibrates at a frequency matching the natural (resonance) frequency of the scaling insert (typically 25 kHz or 30 kHz.) The vibration of the metal plates in the transducer (14) is transmitted to the tip (12) of the scaling insert through the connecting body (16).

Referring back to **FIG. 5****,** the base unit (56) includes an ultrasonic power adjustment knob (58) located on the topside (face) panel. The amount of ultrasonic power transmitted to the scaling insert (10) is finely tuned by adjusting this knob (58). As discussed above, ultrasonic power is used to generate movement of the scaling insert (10). Increasing the ultrasonic power increases the distance that the tip (12) of the scaling insert moves without changing the frequency of tip movement. Furthermore, as the ultrasonic power is increased, the light output of the light source (42) also is increased. Conversely, if the ultrasonic power is decreased, the light output is decreased. The base unit (56) also can include an information center (60) with graphic indicators (62) that light-up to show the operational mode of the system. Additionally, the base unit (56) can include a push-button light-up indicator (64) for purging the system.

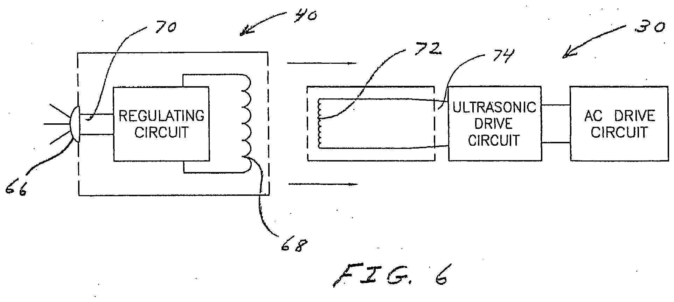

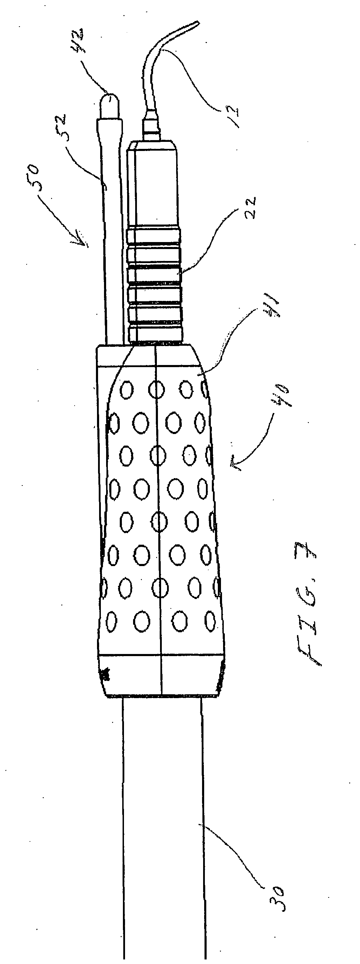

After the base unit (56) is powered on and the primary coil in the handpiece (30) is energized, there is an inductive transfer of electromagnetic energy from the primary coil to the secondary coil (48) located in the tubular sleeve (40) **(****FIGS. 4 and 4A****).** The primary and secondary coils are inductively coupled. The induced electrical current flow in the secondary coil (48) of the sleeve (40) is regulated by an electrical circuit and used to generate light. The regulating circuit is coupled to the secondary coil (68) and light source (42). This electrical current is sufficient to power on the light source (42) connected to the light guide member (50). Any suitable light source (42) can be used including, for example, incandescent bulbs, halogen bulbs, and light-emitting diodes (LEDs). Preferably, LEDs are used as the light source (42). As shown in the schematic diagram of **FIG. 6****,** the LED light source (66) is connected to the secondary coil (68) in the plastic sleeve (40) by electrical conductors (70). The tubular sleeve (40) is mounted over the handpiece (30), which contains a primary coil (72) connected to an ultrasonic drive circuit by an electrical conductor (74). The alternating current drive circuit is connected to the scaler base unit (56) which provides power to the handpiece (30) as described above. In **FIG. 7****,** the scaling insert (10) is shown installed in the handpiece (30) equipped with the tubular sleeve (40).

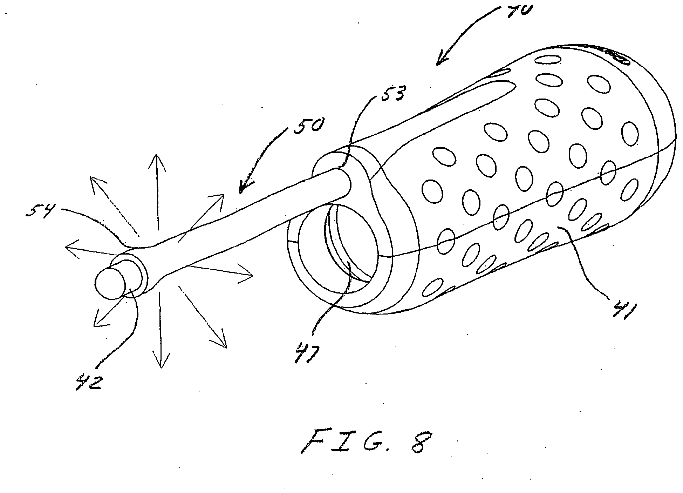

The dental practitioner uses the handpiece and scaling insert assembly to ultrasonically clean the teeth of a patient. The external surface of the tubular sleeve (40) can be textured; for example, it may include dimples for providing a better grip and ergonomic feel. The dental practitioner can easily grasp the sleeve portion (40) of the handpiece (30) during operation. Because the LED light source (66) is located in a position so close to the scaling insert tip (12), the light is able to brightly illuminate the area inside of the mouth where the scaling procedure is being done. The targeted area in the oral cavity is made more visible to the dental practitioner. The flexibility of the light guide member (50) is a critical feature. Particularly, the connector tube or sheath (52) is lightweight and flexible. The connector tube (52) can bend and flex in any 360 degree direction allowing the attached LED light source (66) to emit light in any direction. That is, the connector tube (52) can be rotated 360 degrees along the longitudinal axis of the tubular sleeve (40). Moreover, the connector tube (52) can be rotated 360 degrees along the transverse axis of the tubular sleeve (40). This means that the connector tube (52) and attached LED (66) or other light source can be positioned at any angle along the longitudinal axis of the sleeve (40) as shown in **FIG. 8****.** Furthermore the tubular sleeve (40), by and in itself, can rotate 360 degrees around the handpiece handle portion (32) allowing the light source (42) to emit light at multiple locations on or adjacent to the insert tip (12).

Once the light guide (50) has been moved to the desired position, it remains fixed in place. The light guide (50) has sufficient integrity so that it will not wobble or move freely by itself. The light emitted by the light source (42) is directed at the work area inside of the mouth. The flexibility of the light guide (50) means the light source (42) can be angled to direct the light at particularly troublesome and hard-to-reach areas in the oral cavity. For example, heavy plaque and calculus tend to accumulate on the surface of the tooth lying below the crest of the gingival tissue (sub-gingival area). With the flexible light guide (50) of this invention, the light source (42) can be positioned so that light shines on this area in the mouth.

Another advantage of the removable tubular sleeve (40) with the extending light guide (50) is that the sleeve can be autoclaved after it has been used to treat a patient. The sleeve (40) including the light guide (50) is sterilized in this manner and contamination risks for patients are minimized. The sleeve (40) can be removed easily from the handpiece (30). In practice, the practitioner can gently pull on the sleeve (40) sliding it off the handpiece (30). Then, the sleeve (40) can be autoclaved under ordinary conditions. For example, the sleeve (40) can be autoclaved at a temperature up to 135°C for a time period of ten to twenty minutes. Dental practitioners will recognize that the sleeve (40) and flexible light guide member (50) of this invention provides several other benefits.

For example, the ergonomic design of the sleeve (40) means that the sleeve is comfortable and easy to handle. As discussed above, the diameter of the sleeve (40) is tapered providing alternate pinch zones for the practitioner. Furthermore, the light guide member (50) contains an electrical connector (71) at the distal end (54) for easy replacement of the light source (42). Finally, the sleeve (40) is held on the handpiece handle (32) by an interference fit created by retention means (47) so it will not become detached during use. In still another embodiment, the ultrasonic handpiece (30), which is equipped with the sleeve (40) and extending light guide (50), can be used without installing a dental insert (10). That is, the insert (10) can be removed and the handpiece (30), by and in itself, can be used to emit light in some instances.

Workers skilled in the art will appreciate that various modifications can be made to the illustrated embodiments and description herein without departing from the scope of the present invention. It is intended that all such modifications within the spirit and scope of the present invention be covered by the appended claims.

## Claims

1. An ultrasonic dental handpiece and insert assembly, comprising:
(i) a dental insert (10) having a tip (12) located at one end and a transducer (14) for generating ultrasonic vibrations located at a second end, the tip (12) being coupled to the transducer (14) by a connecting body;
(ii) a handpiece (30) enclosing a primary coil, the handpiece (30) comprising a forward-facing nose portion (34) and a rear- facing handle portion (32), the nose portion (34) including an opening for receiving the dental insert (10);
(iii) a sleeve (40) removably mounted on the handpiece (30), the sleeve (40) enclosing a secondary coil (48), the primary and secondary coils being inductively coupled so that electrical energy is transferred from the primary to secondary coil (48), the energy being sufficient to power a light source (42); and
(iv) a flexible light guide member (50) extending outwardly from the sleeve (40), the light guide member (50) having a proximal end (52) coupled to the sleeve (40) and a distal end (54) containing a light source (42),
wherein the dental insert (10) is a scaling insert used for removing calculus and plaque from tooth surfaces, and wherein the scaling insert is capable of dispensing a cooling fluid.

2. The assembly of claim 1, wherein the scaling insert has an operational frequency of 25 kHz or 30 kHz.

3. The assembly of claim 1, wherein the transducer (14) of the dental insert (10) comprises plates made of nickel alloy.

4. The assembly of claim 1, wherein the connecting body of the dental insert (10) is made of stainless steel.

5. The assembly of claim 1, wherein a soft hand grip member is mounted on the dental insert (10).

6. The assembly of claim 1, wherein the dental insert (10) includes a hard grip member (22).

7. The assembly of claim 1, wherein the light source (42) is a light-emitting diode.

8. The assembly of claim 1, wherein the sleeve (40) is made of an autoclavable material that can be sterilized after use.

9. The assembly of claim 8, wherein the sleeve (40) is made of a rigid polymeric material.

10. The assembly of claim 8, wherein the light guide member (50) is made of a flexible polymeric material.

11. The assembly of claim 1, wherein the dental insert (10) is an air polishing insert used for air polishing tooth surfaces.

## Patentansprüche

1. Ultraschalldentalhandstück und Einsatzeinheit, umfassend:
(i) einen Dentaleinsatz (10) mit einem Endstück (12), das sich an einem Ende befindet, und einem Umformer (14) zum Erzeugen von Ultraschallvibrationen, der sich an einem zweiten Ende befindet, wobei das Endstück (12) mit dem Umformer (14) durch einen Verbindungskörper gekoppelt ist;
(ii) ein Handstück (30), das eine Primärspule umschließt, wobei das Handstück (30) einen nach vorn gewandten Nasenabschnitt (34) und einen nach hinten gewandten Griffabschnitt (32) umfasst und der Nasenabschnitt (34) eine Öffnung zum Aufnehmen des Dentaleinsatzes (10) umfasst;
(iii) eine Hülse (40), die an dem Handstück (30) entfernbar angebracht ist, wobei die Hülse (40) eine Sekundärspule (48) umschließt und die Primär- und Sekundärspule induktiv gekoppelt sind, sodass elektrische Energie von der Primär- auf die Sekundärspule (48) übertragen wird und die Energie ausreichend ist, um eine Lichtquelle (42) mit Energie zu versorgen; und
(iv) ein flexibles Lichtleiterelement (50), das sich von der Hülse (40) nach außen erstreckt, wobei das Lichtleiterelement (50) ein proximales Ende (52) aufweist, das mit der Hülse (40) gekoppelt ist, und ein distales Ende (54), das eine Lichtquelle (42) enthält,
wobei der Dentaleinsatz (10) ein Scalereinsatz ist, der zum Entfernen von Zahnstein und Plaque von Zahnflächen verwendet wird, und wobei der Scalereinsatz fähig ist, ein Kühlfluid abzugeben.

2. Einheit nach Anspruch 1, wobei der Scalereinsatz eine Betriebsfrequenz von 25 kHz oder 30 kHz aufweist.

3. Einheit nach Anspruch 1, wobei der Umformer (14) des Dentaleinsatzes (10) aus Nickellegierung hergestellte Platten umfasst.

4. Einheit nach Anspruch 1, wobei der Verbindungskörper des Dentaleinsatzes (10) aus Edelstahl hergestellt ist.

5. Einheit nach Anspruch 1, wobei ein weiches Handgriffelement an dem Dentaleinsatz (10) angebracht ist.

6. Einheit nach Anspruch 1, wobei der Dentaleinsatz (10) ein hartes Griffelement (22) umfasst.

7. Einheit nach Anspruch 1, wobei die Lichtquelle (42) eine Leuchtdiode ist.

8. Einheit nach Anspruch 1, wobei die Hülse (40) aus einem autoklavierbaren Material hergestellt ist, das nach der Verwendung sterilisiert werden kann.

9. Einheit nach Anspruch 8, wobei die Hülse (40) aus einem starren Polymermaterial hergestellt ist.

10. Einheit nach Anspruch 8, wobei das Lichtleiterelement (50) aus einem flexiblen Polymermaterial hergestellt ist.

11. Einheit nach Anspruch 1, wobei der Dentaleinsatz (10) ein Luftpoliereinsatz ist, der zum Luftpolieren von Zahnflächen verwendet wird.

## Revendications

1. Pièce à main dentaire à ultrasons et ensemble d'insert, comprenant :
(i) un insert dentaire (10) présentant une pointe (12) située à une extrémité et un transducteur (14) pour la génération des vibrations ultrasoniques situées à une seconde extrémité, la pointe (12) étant couplée au transducteur (14) par un élément d'assemblage ;
(ii) une pièce à main (30) renfermant une bobine primaire, la pièce à main (30) comprenant une partie avant orientée vers l'avant (34) et une partie poignée orientée vers l'arrière (32), la partie avant (34) incluant une ouverture pour la réception de l'insert dentaire (10) ;
(iii) un manchon (40) monté de manière amovible sur la pièce à main (30), le manchon (40) renfermant une bobine secondaire (48), les bobines primaire et secondaire étant couplées par induction de sorte que l'énergie électrique est transférée de la bobine primaire à secondaire (48), l'énergie étant suffisante pour alimenter une source de lumière (42) ; et
(iv) un élément de guidage de lumière flexible (50) s'étendant vers l'extérieur du manchon (40), l'élément de guidage de lumière (50) ayant une extrémité proximale (52) couplée au manchon (40) et une extrémité distale (54) contenant une source de lumière (42),
où l'insert dentaire (10) est un insert de détartrage utilisé pour l'élimination du tartre et de la plaque des surfaces de dents, et où l'insert de détartrage est capable de distribuer un fluide de refroidissement.

2. Assemblage selon la revendication 1, dans lequel l'insert de détartrage a une fréquence de fonctionnement de 25 kHz ou 30 kHz.

3. Assemblage selon la revendication 1, dans lequel le transducteur (14) de l'insert dentaire (10) comprend des plaques en alliage de nickel.

4. Assemblage selon la revendication 1, dans lequel l'élément d'assemblage de l'insert dentaire (10) est en acier inoxydable.

5. Assemblage selon la revendication 1, dans lequel un élément de préhension souple est monté sur l'insert dentaire (10).

6. Assemblage selon la revendication 1, dans lequel l'insert dentaire (10) inclut un élément de préhension dure (22).

7. Assemblage selon la revendication 1, dans lequel la source de lumière (42) est une diode électroluminescente.

8. Assemblage selon la revendication 1, dans lequel le manchon (40) est constitué d'un matériau autoclavable qui peut être stérilisé après utilisation.

9. Assemblage selon la revendication 8, dans lequel le manchon (40) est constitué d'un matériau polymère rigide.

10. Assemblage selon la revendication 8, dans lequel l'élément de guidage de lumière (50) est constitué d'un matériau polymère flexible.

11. Assemblage selon la revendication 1, dans lequel l'insert dentaire (10) est un insert de polissage pneumatique utilisé pour le polissage pneumatique des surfaces des dents.
